# EUROPEAN PATENT APPLICATION

(11) **EP 2 106 768 A1**
(43) Date of publication of application: **07.10.2009**
(21) Application number: 08075266.0
(22) Date of filing: 31.03.2008
(51) Int. Cl.: A61C 8/00

(54) **Method of stabilizing a complete denture in the lower jaw and a bar retention system to apply this method**

(71) Applicant: Fundacja Uniwersytetu Medycznego, 60-275 Poznan (PL); Sliwowski, Krzysztof Tomasz, 40699 Erkrath (DE)
(72) Inventor: Sliwowski, Krysztof Tomasz, 40699 Erkrath (DE); Zagala, Rafal, 85-309 Bydgoszcz (PL)
(74) Representative: Kaminski, Zbigniew

(57) **Abstract**

A method of stabilizing a complete denture in the lower jaw, wherein a preliminary procedure of insertion of two implants according to a surgical template is performed, is characteristic by the fact that the implants (8) are inserted in a precisely controlled position, optimal for installing a standardized bar (3) acting as a template for a bar casing (1) that has been previously installed in a duplicate of the prothesis (2). Subsequently the bar casing (1) is installed in the patient's prosthesis (2) while stabilization of the prosthesis (2) in the prosthetic field is achieved by mutual fitting of the bar (3) and the bar casing (1).

A bar retention system comprises a bar, a bar casing and a bar casing template. In the distal parts of the bar (3A), the bar casing (1A) and the bar casing template (7A) there are coaxial sleeves of identical span, where the outer diameters of the bar sleeves (3A) are equal to the diameters of holes in cylindrical elements of the bar casing (1A) and the bar casing template (7A).

## Description

The object of the invention is a method of fixing a complete denture in the lower jaw and a bar retention system to apply this method.

The conventional implantoprosthetic procedure consists in performing individual prosthetic restoration with an individual retention system on the basis of the position of the implants.

The patent description US 2006/0194166 introduces an integrated system to stabilize prostheses comprising a 3D guide, a guide bar, an implant holder, mini-implants and a prosthetic bar, along with the method describing the correct application of the elements.

The method makes it possible to place a prosthesis stabilized on two parallel implants at a given distance. They are joined by a prosthetic bar mounted on them, thus achieving greater strength. Stabilization of the prosthesis is achieved by a catch mechanism between the prosthetic bar and a template installed in the prosthesis. The first and crucial element of the system is a 3D guide that resembles a pair of compasses. Both its arms have sharp inwardly positioned extensions. Moreover, on one of the arms there is a bar fixed crosswise. Its ends have two parallel cylinders. The device allows drilling two parallel holes at a given span while sharp edges that puncture the gum from both sides position the bar precisely over the bone edge of the alveolar ridge, depending on the thickness of the gum. After the first implant is inserted, the guide bar is mounted on its top. It serves as a template to insert the second implant. Subsequently, on heads of both implants a prefabricated prosthetic bar is installed. Its cap-shaped endings precisely fit the heads of the implants. The last stage consists in installing a catch element in the prosthesis, thus yielding retention between the bar and the prosthesis.

The patent US 6,692,254 also describes a system to support a prosthesis on a folding bar placed on dental implants.

The method makes it possible to place a screwable bar that stabilizes the prosthesis. Unlike the conventional method including metal casting of the bar construction, this project assumes sticking the bar construction together from separate prefabricated cylindrical elements having two "wings" each. The cylindrical shape allows fixing the element on a platform of the implant whereas the "wings" are designed to link several elements by means of gluing.

The method and the system to stabilize removable prostheses is also known from the patent US 2006/0223029.

The method described in the patent is known under the brand name Branemark Novum. The system is intended to be applied on both lower and upper edentulous jaws. On a pre-milled bone surface a bar casing template is fixed. It is used to drill several bone tunnels in order to insert dental implants. Subsequently, a bottom part of the bar is screwed on the implants, its flat bottom surface adjoining the bone surface. The top part of the bar - permanently fixed to the bottom part - is installed by means of screws. It constitutes supporting for a suprastructure that is permanently installed in a patient's individual prosthesis. The suprastructure has a U-shaped slot which closely fits the bar supported on the implants. In side parts of the prosthesis there are two bolt mechanisms which, after locking, block the prosthesis in an established position making it impossible to remove it from the bar.

The method according to the invention consists in a preliminary procedure of inserting two implants according to a surgical template. The essence of the invention consists in the fact that the implants are inserted in a precisely controlled position, optimal for installing a standardized bar acting as a template for the bar casing that has been previously installed in a duplicate of the prosthesis. Subsequently, a bar casing is installed in the patient's denture while stabilization of the prosthesis in the prosthetic field is achieved by mutual fitting of the bar and the bar casing.

A variation of the method described above uses a standardized bar casing placed in the patient's prosthesis. The bar casing outlines the path for inserting implants in a position that is optimal for installing a bar acting as a template for the bar casing. Stabilization of the prosthesis in the prosthetic field is achieved by mutual fitting of the bar and the bar casing.

The bar retention system to apply the method comprises a bar and a bar casing. The essence of the invention consists in the fact that in the distal parts of the bar and the bar casing there are coaxial sleeves of identical span. The outer diameters of the sleeves are equal to the diameters of holes in ring elements of the bar casing.

It is favorable when the holes in the cylindrical elements of the bar casing are pass-through.

The bar retention system is a set of standardized elements that applied to a proper clinical procedure enable performing prosthetic supply based on dental endosteal implants inserted into an edentulous lower jaw. The method allows performing a possibly little invasive procedure of implantation using a flap-less technique (without soft tissue preparation). It allows a full control over position of the implants in the alveolar area of the lower jaw, in the zone between the mental foramens, and an immediate subsequent supplying the patient with a complete denture having a retention system closely fit to previously inserted implants.

An exemplary application of the invention is shown in figures, where:

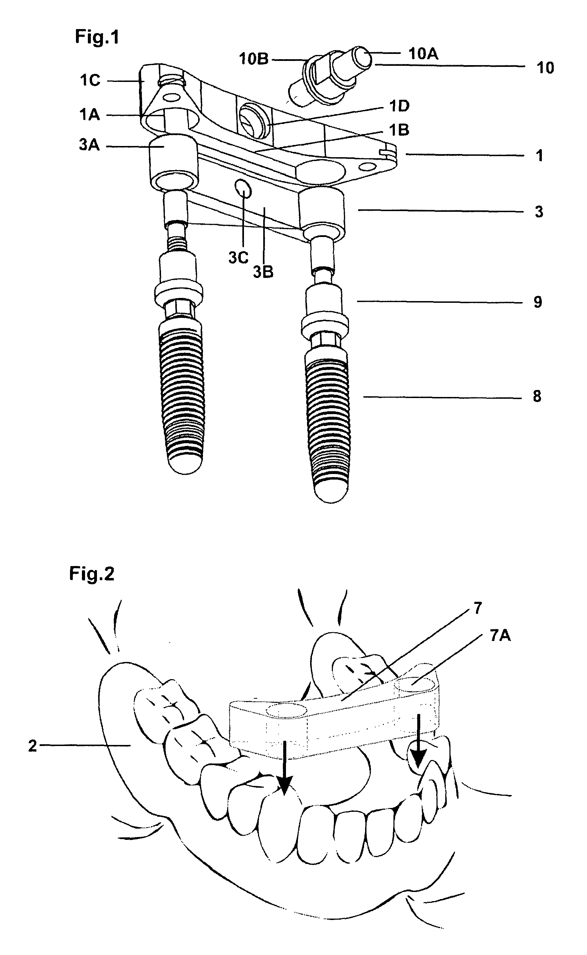

Fig. 1 shows the position of the bar, the bar casing and the implants;
Fig. 2 shows a front view of the prosthesis with the bar casing template;

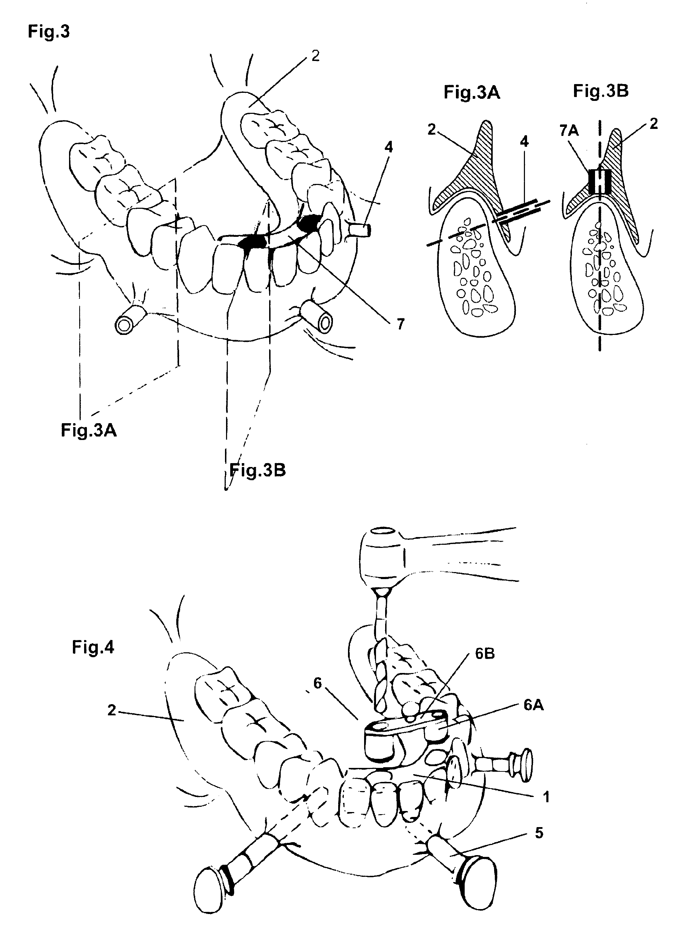

Fig. 3 shows a front view of the prosthesis with the bar casing template installed;
Fig. 3A and 3B show a cross-section of the jaw seen in Fig. 2;
Fig. 4 shows a front view of the prosthesis during the procedure of implantation;

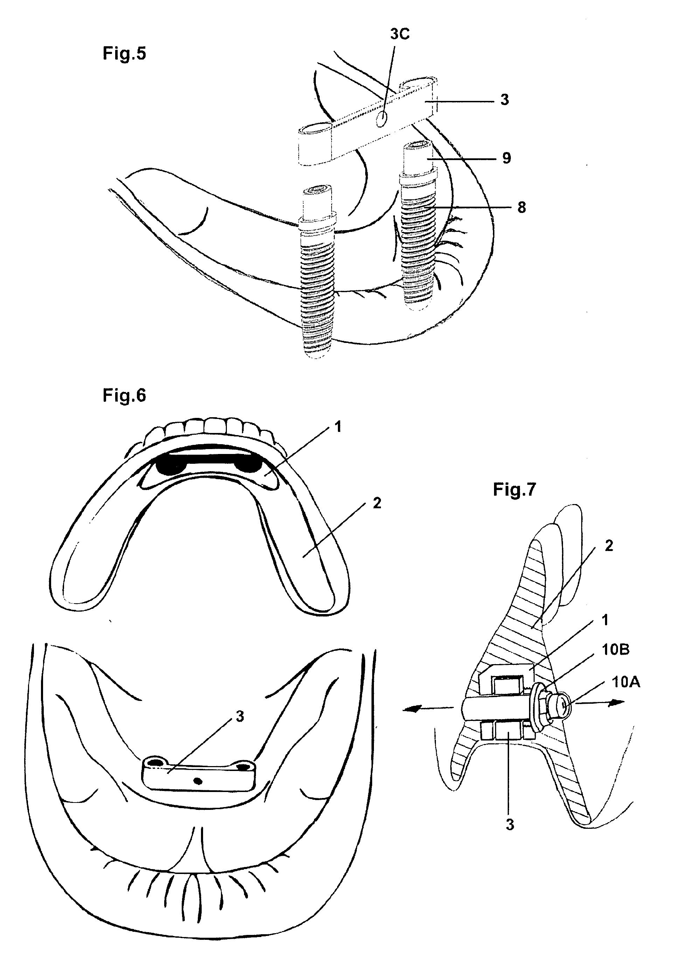

Fig. 5 shows a view of the prosthetic field with the implants and the bar being inserted;
Fig. 6 shows a bottom view of the prosthesis and the jaw with the casing of the bar installed;
Fig. 7 shows a cross-section of the bolt mechanism.

The first stage of the procedure consists in making a surgical template comprising a duplicate of the patient's prosthesis (2) with three sleeves (4) of horizontal stabilizing pins (5) installed and - in the front section - the bar casing template (7). The stabilizing pins (5) are meant to fix the prosthesis (2) position in the patient's mouth during the implantation procedure. The bar casing template (7) is precisely positioned in the plate of a duplicate of the prosthesis on the basis of the optimal position determined by a plaster model of the prosthetic field of the jaw and a patient's proper full prosthesis. It is then corrected on the basis of cross-sectional radiography imaging performed with a prosthesis having the bar casing template provisionally placed. Additionally, the radiography allows verifying the position of the sleeves of the horizontal stabilizing pins, so the applied pins (5) perforate the jaw in secure places.

After the verification and possible correction of the position of the bar casing template (7) as well as the sleeves (4) the procedure of implantation is performed. To stabilize the position of the bar casing template (7) three holes are drilled in the jaw along the axes of the sleeves in the stabilizing pins (4) and the pins (5) are inserted. Drilling the bone bed in order to insert the implants is performed through holes in a distal part of the bar casing (1A). The direction of drilling is controlled by means of drill guides (6) which closely fit holes in the bar casing template and the drill used. The last stage of the procedure consists in insertion of two implants and installation of the standardized bar (3) on the previously inserted implants (8). In case of using two-piece implants, a prosthetic abutment (9) as an intermediate element is required to serve as an adapter between the implant platform and the bar sleeve (3A). The bar (3) is attached to the pillars by means of gluing.

Another variation of the presented method assumes using the patient's ready prosthesis (2) with the bar casing (1) installed as a surgical template, thus replacing the bar casing template and the duplicate of the prosthesis. After inserting the implants (8) in positions set by the surgical template, a standardized bar (3) is mounted on them. The bar constitutes a stabilizing element for the patient's prosthesis with the bar casing (1) previously installed. The final action that changes the function of the surgical template is closing the upper holes in the sleeves of the bar casing (1A) as well as installation of the bolt system (10).

The procedures described above make it possible to insert implants in a precisely controlled position that is optimal for the standardized bar installation. The standardized bar acts as a template for the bar casing (1) which is installed inside the plate of a finished prosthesis. The procedure of the bar casing (1) installation is performed on the basis of a prosthetic impression obtained using the patient's prosthesis at a stage after installing the bar inside the oral cavity. Simultaneously with installation of the bar casing, installation and adjustment of the bolt mechanism (10) are performed.

Mutual fitting of the bar (3) and the bar casing (1) is responsible for stabilizing the prosthesis (2) in the prosthetic field while its retention depends on the bolt mechanism (10). The main element of the bolt is constituted by a pivot (10A) that moves backwards and forwards, thus enabling locking the bar in the casing and unlocking it.

The bar consists of a rectangular or trapezoidal span (3B) having on its ends parallel sleeves (3A) whose axes are perpendicular to the span that links them. In its middle part the span has a hole which is necessary for retention of the pivot (10A) whose body is installed in the bar casing (1). In a vertical view the line going through the front edge of the span is tangent to circles determined by the outer edge of both sleeves.

The bar casing (1) is a solid construction that functions as a template of the bar (3), i.e. the inner space inside the casing is limited and makes it possible for the bar to nest inside it in a fixed position. That mutual relation is responsible for fixing the prosthesis position relative to the prosthetic field. The middle part of the casing (1B) is a span element of quadrangular cross-section while at the bottom surface there is a straight line incision of rectangular or trapezoidal cross-section consistent with the shape and size of the bar cross-section. Both ends of the span element have cylinders (1A) with round axial pass-through holes. The span and the inner diameter of the cylinders (1A) reflect the span and the outer diameter of the outer sleeve of the bar (3A). The vertical wall of the casing turned towards the lingual side forms an arch, thus increasing space for the tongue. Retention wings for acrylic resin (1C) are placed distally related to the cylinders. They have inlets of various shapes that reinforce the construction of wings on the plate of a complete denture. Similarly, on the vertical walls of the casing there are incisions of different shapes designed to additionally increase retention of the bar casing inside the prosthesis plate. In the vertical walls of the span element there are pass-through holes (1D) placed in the sites of intersection of the long axis of a corresponding hole in the bar span (3C) when both parts are folded. The holes are the place to install a standard bolt system (10) applied in conventional prosthetics. Its aim is to support and stabilize the prosthesis related to the bar mounted on the implants.

The shape and main construction assumptions of the bar casing template (7) correspond to the structure of the bar casing. The most important element is constituted by pass-through holes (7A) whose size and location are analogous to the holes in the casing cylinders (1A). The template may have an incision for nesting the bar, however it is not necessary.

The drill guide (6) consists of two sleeves (6A) linked by a junction (6B). The outer diameter of the sleeve (6A) reflects the diameter of the holes in the bar casing (1A). Each guide corresponds to a different drill, so a diameter of the working part of the drill reflects a diameter of the hole in the guide sleeve (6A). Vertical stabilizing pins (11) are cylindrical and their intersection is equal to a diameter of a corresponding drill. In case of drilling second hole, the relevant pin is inserted into the first bone bed, so the guide and the whole construction of the surgical template are more stable.

## Claims

1. A method of stabilizing a complete denture in the lower jaw, wherein a preliminary procedure of insertion of two implants according to a surgical template is performed, **characterized in that** the implants (8) are inserted in a precisely controlled position, optimal for installing a standardized bar (3) acting as a template for a bar casing (1) that has been previously installed in a duplicate of the prosthesis (2). Subsequently said bar casing (1) is installed in the patient's prosthesis (2) while stabilization of the prosthesis (2) in the prosthetic field is achieved by mutual fitting of said bar (3) and bar casing (1).

2. A method of stabilizing a complete denture in the lower jaw, wherein a preliminary procedure of insertion of two implants according to the surgical template is performed, **characterized in that** a standardized bar casing (1) placed in the prosthesis (2) outlines the path for inserting said implants (8) in an optimal position for installing said bar (3) which acts as a template for the bar casing while stabilization of the prosthesis (2) in the prosthetic field is achieved by mutual fitting of the bar (3) and the bar casing (1).

3. A bar retention system comprising a bar, a bar casing and a bar casing template **characterized in that** in the distal parts of said bar (3A), bar casing (1A) and bar casing template (7A) there are coaxial sleeves of identical span, where the outer diameters of said bar sleeve (3A) are equal to the diameters of holes in cylindrical elements of said bar casing (1A) and bar casing template (7A).

4. A bar retention system according to claim 3, **characterized in that** in said bar casing (1) holes of cylindrical elements are pass-through.
